# EUROPÄISCHE PATENTSCHRIFT

(11) **EP 1 618 350 B1**
(45) Veröffentlichungstag und Bekanntmachung des Hinweises auf die Patenterteilung: **29.12.2010**
(21) Anmeldenummer: 04729626.4
(22) Anmeldetag: 27.04.2004
(51) Int. Cl.: G01C 1/02, G12B 5/00

(54) **VORRICHTUNG ZUR WINKELEINSTELLUNG EINER ZIELEINHEIT AUF EIN ZIEL**
DEVICE FOR ADJUSTING THE ANGLE OF A SIGHTING UNIT TO A TARGET
DISPOSITIF POUR AJUSTER UN ANGLE D'UNE UNITE DE VISEE SUR UNE CIBLE

(30) Priorität: 30.04.2003 CH 7562003
(43) Veröffentlichungstag der Anmeldung: 25.01.2006
(73) Patentinhaber: Leica Geosystems AG, 9435 Heerbrugg (CH)
(72) Erfinder: HÄLE, Anton, CH-9435 Heerbrugg (CH)
(74) Vertreter: Kaminski Harmann
(86) Internationale Anmeldenummer: PCT/EP2004/004432
(87) Internationale Veröffentlichungsnummer: WO 2004/097338

(56) Entgegenhaltungen:
- DE-C- 19 615 515
- US-A- 6 076 266

## Beschreibung

Die Erfindung betrifft eine Vorrichtung zur Winkeleinstellung einer Zieleinheit auf ein Ziel, insbesondere für ein geodätisches Messinstrument, gemäss dem Oberbegriff des Anspruchs 1.

Geodätische Messinstrumente, beispielsweise Theodolite, Tachymeter oder Totalstationen, bei welchen eine Zieleinheit auf ein Ziel durch Rotation um mindestens eine Achse ausgerichtet wird, zeichnen sich meist durch eine sehr hohe Winkel-Einstellgenauigkeit, die abhängig von der Genauigkeitsklasse bis unter 0,5" bzw. 0,15 mgon beträgt, aus. Dermassen hohe Genauigkeiten erfordern hochpräzise Triebe zur exakten Einstellung eines Winkels. Neben der hohen Winkel-Einstellgenauigkeit werden jedoch auch hohe Winkel-Verstellgeschwindigkeiten gefordert, um eine schnelle und unkomplizierte, grobe Winkelverstellung im Bereich von beispielsweise +/-180° zu ermöglichen. Auch bei Nivellieren und anderen geodätischen Messinstrumenten geringerer Genauigkeitsklasse besteht die Forderung nach einerseits einer schnellen, andererseits einer feineren Winkeleinstellung, wobei die Präzision der Winkel-Feineinstellung von der geforderten Genauigkeitsklasse abhängt. Diese widersprüchliche, einen Zielkonflikt bildende Forderung nach einerseits einer präzisen Winkel-Feineinstellung, andererseits einer Winkel-Schnellverstellung liegt unterschiedlichen aus dem Stand der Technik bekannten Vorrichtungen zugrunde.

In einer ersten bekannten, weiter unten durch Abbildungen und eine ausführlichere Beschreibung detaillierter beschriebenen Vorrichtung zur Winkeleinstellung in einem geodätischen Messinstrument, insbesondere einem Theodolit, Tachymeter oder einer Totalstation, kommt eine fremdschaltbare, mechanisch betätigbare, reibschlüssige Kupplung in Form einer Klemmvorrichtung zum Einsatz, die durch Lösen der Klemmung ein manuelles Schnellverstellen über direktes Verdrehen der Alhidade bzw. des Fernrohres ermöglicht, wobei in Reihe zu der Klemmvorrichtung z.B. ein Gewindespindel-Feintrieb zur endlichen Feineinstellung des Winkels innerhalb eines begrenzten Bereichs geschaltet ist. Zwar ermöglicht diese Vorrichtung sowohl ein sicheres Fixieren des eingestellten Winkels durch ein ausreichend hohes Haltemoment von bis zu etwa 1050 Nmm, als auch eine leichtgängige, nahezu reibungsfreie Schnellverstellung nach Lösen der Klemmung, jedoch muss bei Erreichen der Grenzen des Feineinstellbereichs zunächst wieder durch Lösen der Klemmung schnellverstellt und die Feineinstellung wieder in die Mitte ihres Feineinstellbereichs gebracht werden, bevor die Feineinstellung des Winkels fortgesetzt werden kann.

Eine zweite aus dem Stand der Technik bekannte, unten genauer dargestellte Vorrichtung zur Winkeleinstellung in beispielsweise einem Theodolit umfasst eine drehmomentgeschaltete, reibschlüssige Rutschkupplung zur manuellen Schnellverstellung über direktes Verdrehen der Alhidade bzw. des Fernrohres durch Überwinden eines Haltemoments und einen zu der Rutschkupplung in Reihe geschalteten, mechanischen, endlosen Feintrieb, z.B. einen Schneckenfeintrieb zur indirekten unbegrenzten Winkel-Feineinstellung über einen Drehknopf. Das Haltemoment der Rutschkupplung kann nicht während des normalen Betriebs durch den Kunden, sondern lediglich über einen Eingriff in das Gerät durch Veränderung einer Federvorspannung verändert werden. Wegen der Geometrie des Theodolitenaufbaus wäre ein unkompliziertes mechanisches Verstellen der Federvorspannung über einen Hebel, der auf dem selben Teil wie der Drehknopf, nämlich am Theodolitengehäuse der Alhidade angeordnet ist, aus kinematischen Gründen problematisch, da sich die Rutschkupplung am ortsfesten Theodolitenunterteil befindet. Aufgrund des konstanten, etwa 520 Nmm betragenden Haltemoments der Rutschkupplung ist es daher nicht möglich, eine leichtgängige, direkte Schnellverstellung, die eine geringe Haltekraft der Rutschkupplung erfordern würde, und eine zuverlässige, sichere, eine hohe Haltekraft erfordernde Fixierung eines eingestellten Winkels, insbesondere bei und nach Durchführung der Feineinstellung, zu ermöglichen, weshalb ein versehentliches Verstellen des Winkels, beispielsweise bei Bedienung einer am Theodolitengehäuse der Alhidade angeordneten Tastatur oder durch an der Alhidade angeschlossene Kabel erfolgen kann.

Eine dritte bekannte, ebenfalls unten detaillierter beschriebene Vorrichtung zur Winkeleinstellung in einem geodätischen Messinstrument, insbesondere einem Theodolit, Tachymeter oder einer Totalstation, weist zur unbegrenzten Winkel-Feineinstellung einen unendlichen, selbsthemmenden Schneckenfeintrieb auf, dessen Schnecke aus dem Schneckenrad ausgeschwenkt werden kann, wodurch der Formschluss zwischen Schnecke und Schneckenrad gelöst wird und somit ein leichtgängiges, manuelles Schnellverstellen des Winkels über direktes Verdrehen der Alhidade bzw. des Fernrohres möglich ist. Im eingeschwenkten Zustand des Schneckenfeintriebes ist der eingestellte Winkel fixiert und lässt sich nur mittels eines Drehknopfes über das Schneckenfeingetriebe, jedoch nicht durch direktes Verdrehen der Alhidade bzw. des Fernrohres verstellen. Jedoch ist beim Einschwenken das Einrasten der Schnecke in das Schneckenrad und das Eingreifen der Verzahnungen höchst problematisch, da durch so genanntes Ratschen die Zahnflanken von Schnecke und Schneckenrad beschädigt werden können, was eine Vergrösserung der Toleranzen und somit eine Verringerung der Einstellgenauigkeit zur Folge hat.

In der US 6,076,266 wird ein Theodolit mit einem auskuppelbaren Verstellmechanismus zum Ausrichten eines Fernrohrs auf ein Ziel beschrieben. Ein Schnellverstellen kann durch Lösen einer fremdschaltbaren, mechanisch betätigbaren, reibschlüssigen Kupplung und direktes manuelles Verdrehen des Fernrohres erfolgen. Bei eingekuppelter Kupplung ist das Fernrohr mittels eines Schneckengetriebes indirekt durch manuelles Drehen eines mit einer Schnecke verbundenen Drehknopfs feineinstellbar. Das Schneckenrad, in welches die Schnecke eingreift, ist zwischen zwei Kupplungsscheiben angeordnet. Die beiden Kupplungsscheiben sind bei geöffneter Kupplung derart in Achsrichtung beabstandet, dass sich das dazwischen befindliche Schneckenrad frei bewegen kann, wodurch das Schnellverstellen des Fernrohrs ermöglicht wird. Die Kupplungsscheiben mit dem dazwischen liegenden Schneckenrad sind wiederum zwischen zwei derart positionierten, zangenartig gelagerten Rollen angeordnet, dass durch Verringern des Abstands der beiden auf den Kupplungsscheiben abrollenden Rollen die Kupplungsscheiben zusammenbewegt werden können. Hierdurch wird das Schneckenrad zwischen den beiden Kupplungsscheiben eingeklemmt und somit die Kupplung geschlossen, so dass das Feineinstellen des Fernrohrs durch Drehen der Schecke über den Drehknopf möglich ist. Da die zangenartig gelagerten Rollen mittels einer Feder zusammengedrückt werden, ist die Kupplung im Normalbetrieb geschlossen. Das Auseinanderfahren der Rollen und somit das Öffnen der Kupplung zum Schnellverstellen erfolgt durch teilweisen Drehen einer Exzenterhülse, die zwischen der Zangenlagerung der Rollen angeordnet ist und die die Schnecke umgibt. Die Exzenterhülse führt zu einem Verstellhebel am Drehknopf. Da die beiden Rollen nur an einer einzigen Stelle der Kupplungsscheiben punktuell wirken, werden die beiden Kupplungsscheiben ungleichmässig zusammengedrückt, weshalb es zu einem gegenseitigen Verkippen der Kupplungsscheiben kommt. Somit wirkt nur ein kleiner Bereich nahe den Rollen als effektive Kupplungsfläche zwischen den Kupplungsscheiben und dem Schneckenrad, weshalb eine relativ grosse Anpresskraft der Rollen erforderlich ist. Durch das ungleichmässige Zusammendrücken der Kupplungsscheiben treten ausserdem unterschiedliche Haltemomente entlang dem Umfang auf, wodurch weiters ein Kippmoment - insbesondere bei Belastung der Kupplung - entsteht. Aufgrund der hohen Anpresskraft der Rollen ist ein ungehindertes Feineinstellen, das bei der genannten Vorrichtung mit einem Abrollen der Rollen auf den Kupplungsscheiben einhergehen muss, nicht möglich. Die beschriebene Vorrichtung kann somit den hohen Anforderungen an ein hochpräzises geodätisches Messinstrument nicht gerecht werden. Ein weiterer Nachteil der in der US 6,076,266 offenbarten Vorrichtung ist der grosse Platzbedarf in radialer Richtung. In modernen Totalstationen lassen die Platzverhältnisse den Einsatz eines derartigen Verstellmechanismus als Horizontaltrieb nicht zu. Einen weiteren Nachteil stellen die zahlreichen Einzelteile der offenbarten Vorrichtung dar, die eine aufwendige Montage und hohe Herstellungskosten zur Folge haben. Durch die hohen Abrollkräfte der Rollen auf den Kupplungsscheiben besteht weiters die Gefahr einer Riefenbildung. Die Verschleissanfälligkeit der beschriebenen Vorrichtung ist somit ebenfalls problematisch und bei Einsatz in einem Hochpräzisionsinstrument kaum hinnehmbar.

DE 196 15 515 C1 offenbart eine elektrische Antriebseinrichtung zum Ausrichten eines Theodolits auf ein Ziel mittels mindestens eines elektrischen Stellmotors. Die grobe Zielausrichtung der Alhidade erfolgt hierbei entweder über eine manuelle Zielausrichtung der Alhidade, wobei mittels einer Rutschkupplung ein Blockieren der Alhidade durch den Stellmotor vermieden wird, oder über den Stellmotor selbst, der so lange mit Strom beaufschlagt wird, bis ein über einen unter dem Theodolitengehäuse der Alhidade angeordneten Drehteller vorgegebener grober Winkel-Sollwert erreicht ist. Aufgrund des konstanten Haltemoments der Rutschkupplung ist eine leichtgängige, mechanische Schnellverstellung bei gleichzeitiger, sicherer und zuverlässiger Fixierung des Einstellwinkels nicht möglich. Die elektrische Schnellverstellung erfordert ein aufwendiges Erfassen einer Führungsgrösse, einen komplexen Regelkreis zur Vermeidung von Schwingungen und einen zusätzlichen Platzbedarf für den Elektroantrieb und die Energieversorgung.

Eine Aufgabe der Erfindung ist es daher, eine Vorrichtung zur Winkeleinstellung einer Zieleinheit auf ein Ziel, insbesondere für ein geodätisches Messinstrument, zu schaffen, welche Vorrichtung ein leichtgängiges, unkompliziertes, manuelles Schnellverstellen des Winkels durch direktes Verdrehen der Zieleinheit, eine sichere, zuverlässige Fixierung des Schnellverstellungsmechanismus und ein präziseres, indirektes Einstellen des Winkels, insbesondere mit einem unbegrenzten Einstellbereich, ermöglicht.

Eine weitere Aufgabe besteht darin, die aus dem Stand der Technik bekannten gattungsgemässen Vorrichtungen in Hinsicht auf Bedienkomfort, Bediensicherheit, Herstellungskosten, Vorrichtungsgrösse, Winkeleinstellgenauigkeit, Lebensdauer und Wartbarkeit zu optimieren.

Diese Aufgaben werden durch die Verwirklichung der Merkmale des unabhängigen Anspruchs gelöst. Merkmale, die die Erfindung in alternativer oder vorteilhafter Weise weiterbilden, sind den abhängigen Patentansprüchen zu entnehmen.

Die erfindungsgemässe Vorrichtung zur Winkeleinstellung einer Zieleinheit auf ein Ziel gegenüber einer Bezugsbasis weist, wie die aus dem Stand der Technik bekannten Vorrichtungen, mindestens ein Lager zur drehbaren Lagerung, beispielsweise ein Wälzlager oder Gleitlager, auf, welches ein Verdrehen der Zieleinheit gegenüber der Bezugsbasis um mindestens eine Achse ermöglicht. Um die drehbare Beweglichkeit der Zieleinheit gegenüber der nicht zwangsläufig ortsfesten Bezugsbasis um die Achse einzuschränken, zu verhindern oder den Verdrehwinkel gezielt verstellen zu können, sind mindestens ein Getriebe und mindestens eine elektrisch fremdschaltbare, einen Elektromagneten aufweisende Kupplungseinheit zwischen der Zieleinheit und der Bezugsbasis in Reihenschaltung angeordnet. Ein Drehmomentfluss um die Achse zwischen der Zieleinheit und der Bezugsbasis erfolgt somit im Wesentlichen über das Getriebe und die Kupplungseinheit, wobei ein Verdrehen der Zieleinheit gegenüber der Bezugsbasis um die Achse über das Getriebe oder/und über die Kupplungseinheit stattfinden kann. Wird der Drehmomentfluss durch die Kupplungseinheit unterbrochen, kann die Zieleinheit weitgehend ohne Widerstand durch ein direkt an ihr angreifendes Moment verdreht werden, insbesondere durch ein direktes händisches Verdrehen der Zieleinheit. Wird hingegen der Drehmomentfluss über die Kupplungseinheit durch ein Grenzmoment begrenzt, muss das direkt an der Zieleinheit angreifende, insbesondere durch direktes händisches Verdrehen der Zieleinheit aufgebrachte Drehmoment mindestens dem Grenzmoment der Kupplungseinheit entsprechen, damit ein direktes Verdrehen stattfinden kann. Bei vollkommen geschlossenem Drehmomentfluss kann im Rahmen des maximal von der Kupplung übertragbaren Drehmoments und der Belastbarkeitsgrenzen der weiteren im Drehmomentfluss befindlichen Komponenten kein direktes Verdrehen der Zieleinheit gegenüber der Bezugsbasis durch ein direkt an der Zieleinheit angreifendes Moment erfolgen.

Neben der direkten Verdrehmöglichkeit der Zieleinheit über die Kupplung besteht die Möglichkeit, die Verdrehung präziser durch ein Verstellen des Getriebes zu bewirken. Unterschiedliche Ausführungsformen von Getrieben und Feingetrieben zur Einstellung eines Drehwinkels zwischen einer Zieleinheit und einer Bezugsbasis um eine Achse sind aus dem Stand der Technik, insbesondere aus der Geodäsie, speziell aus der Theodolittechnik bekannt. Eine mögliche Ausführungsform eines solchen Getriebes mit unbegrenztem Einstellbereich stellt ein bei Kraftflussrichtungsumkehr selbsthemmendes Schneckengetriebe mit einer über einen Drehknopf oder elektromotorisch direkt oder indirekt verdrehbaren Schnecke und einem Schneckenrad, das um die Achse des Lagers angeordnet ist, dar. Selbstverständlich können auch andere Getriebe mit unbegrenztem Einstellbereich, insbesondere Schraubradgetriebe, oder Getriebe mit begrenztem Einstellbereich wie beispielsweise Gewindespindel-Mutter-Getriebe eingesetzt werden. Der Antrieb des Getriebes kann zum Beispiel manuell oder elektromotorisch erfolgen, wobei auch ein indirekter Antrieb über mindestens ein zweites Getriebe realisierbar ist.

Die Kupplungseinheit ist elektrisch fremdschaltbar und weist mindestens einen Elektromagneten auf. Ein über die Kupplungseinheit fliessender Drehmomentfluss wird durch Wirken oder nicht Wirken eines Magnetfeldes begrenzt oder unterbrochen. Dieses Kupplungsprinzip ist aus dem Stand der Technik bekannt. Beispielsweise kann durch Wirken eines Magnetfeldes auf einen ersten ferromagnetischen Reibkörper unter Gegenwirken einer Federkraft dieser erste Reibkörper in Kontakt mit einem zweiten Reibkörper treten, wodurch es zu einem Reibschluss zwischen diesen beiden Reibkörpern kommt und somit ein Drehmoment übertragen werden kann, wobei das hierdurch maximal übertragbare Grenzdrehmoment in einem Verhältnis zu der magnetischen Feldstärke steht. Die magnetische Feldstärke ist wiederum abhängig von einer an einem Elektromagneten anliegenden elektrischen Spannung. Somit besteht ein Zusammenhang zwischen einer Spannung und dem maximal übertragbaren Drehmoment der Kupplungseinheit. Beispielsweise durch den Einsatz eines aus dem Stand der Technik bekannten Permanent-Elektromagneten mit mindestens einem Permanentmagneten und mindestens einer Erregerwicklung, die bei angelegter Spannung das Permanentmagnetfeld des Permanentmagneten wenigstens in Teilbereichen, insbesondere im Bereich des ferromagnetischen Reibkörpers, reduziert oder neutralisiert, ist es möglich, durch Anlegen einer Spannung den Drehmomentfluss zu unterbrechen, wohingegen im spannungslosen Zustand der Drehmomentfluss geschlossen ist und ein Drehmoment bis zu einem gewissen Grenzwert übertragen werden kann. Insbesondere bei einem mobilen Einsatz eines Geräts, das die genannte Vorrichtung zur Winkeleinstellung aufweist, erweist sich der Einsatz eines solchen Permanent-Elektromagneten als vorteilhaft, da Spannung nur kurzzeitig zur Unterbrechung des Drehmomentflusses, also zur Schnellverstellung der Zieleinheit, zur Verfügung stehen muss und somit der Stromverbrauch des Geräts reduziert werden kann. Dies kann jedoch auch durch den Einsatz eines Elektromagneten, der einer Federkraft entgegenwirkt, erreicht werden. Selbstverständlich ist es möglich, den Elektromagneten als eine Anordnung mehrerer einzelner Einzelmagneten auszubilden. Weitere Ausbildungsformen einer elektrisch fremdschaltbaren, einen Elektromagneten aufweisenden Kupplung sind aus dem Stand der Technik bekannt.

Die Kupplungseinheit und das Getriebe sind ebenfalls als eine gemeinsame Einheit ausbildbar, in welcher Kupplungsund Getriebe-Funktionselemente als ein gemeinsames Teil ausgeformt sind.

Durch den Einsatz einer elektrisch fremdschaltbaren Kupplung ist es ferner möglich, die Bedieneinheit zur elektrischen Schaltung der Kupplungseinheit an einem beliebigen Ort anzubringen.

Eine mögliche Anwendung der beschriebenen Vorrichtung zur Winkeleinstellung einer Zieleinheit auf ein Ziel ist der Einsatz in einem geodätischen Messinstrument, beispielsweise einem Theodolit, einem Tachymeter oder einer Totalstation mit elektro-optischer Distanzmessung, wobei die mindestens eine Vorrichtung zur Ausrichtung der Zieleinheit auf ein zu vermessendes Ziel in horizontaler oder vertikaler Richtung zur Horizontal- bzw. Höhenwinkelmessung zwischen einem Bezugssystem und dem Ziel dient. Dabei kann die Zieleinheit beispielsweise als ein Zielfernrohr, eine Kamera, ein Laser oder eine mechanische Komponente ausgebildet sein. Auch ein Einsatz der Vorrichtung in einem Nivellier, einem Zielsystem oder einem geodätischen Scanner ist unter anderem möglich. Selbstverständlich beschränkt sich die Erfindung nicht nur auf diese Anwendungen.

Ein weiterer Vorteil der Erfindung besteht im geringen Platzbedarf der Vorrichtung in radialer Richtung zur Achse. Insbesondere in modernen Totalstationen sind die Platzverhältnisse für den Horizontaltrieb in horizontaler Richtung stark eingeschränkt. Da sich die Kupplungseinheit bei der erfindungsgemässen Vorrichtung bei Einsatz als Horizontaltrieb unterhalb des Getriebes - und nicht wie bei den meisten aus den Stand der Technik bekannten Vorrichtungen neben dem Getriebe - befindet, ist ein platzsparender Einsatz als Horizontaltrieb möglich. Da sich die erfindungsgemässe Vorrichtung aus relativ wenigen, wartungsfreien Bauteilen zusammensetzt, können Herstellungs- und Wartungskosten eingespart werden. Die Feineinstellbarkeit der Zieleinrichtung wird durch die Kupplungseinheit nicht behindert, da die Kupplungskraft nicht über hochpräzise einzustellende Teile aufgebracht werden muss. Somit kann ebenfalls ein ungewolltes, aus dem Öffnen und Schliessen der Kupplungseinheit resultierendes Verstellen vermieden werden.

Der Stand der Technik und die Erfindung werden im Folgenden anhand von Figuren rein beispielhaft in möglichen Ausführungsformen beschrieben.
- Fig. 1a und 1b: zeigen in zwei Ansichten eine Ausführungsform einer ersten aus dem Stand bekannte Vorrichtung zur Winkeleinstellung mit einer fremdschaltbaren, mechanisch betätigbaren, reibschlüssigen Kupplung in Form einer Klemmvorrichtung.
- Fig. 2a und 2b: zeigen in zwei Ansichten eine Ausführungsform einer zweiten aus dem Stand der Technik bekannten Vorrichtung zur Winkeleinstellung mit einer drehmomentgeschalteten, reibschlüssigen Rutschkupplung.
- Fig. 3a und 3b: zeigen in zwei Ansichten eine Ausführungsform einer dritten aus dem Stand der Technik bekannten Vorrichtung zur Winkeleinstellung mit einer aus einem Schneckenrad ausschwenkbaren Schnecke.
- Fig. 4a und 4b: zeigen in zwei Ansichten eine mögliche Ausführungsform einer erfindungsgemässen Vorrichtung zur Winkeleinstellung mit einer, einen Elektromagneten aufweisenden, elektrisch fremdschaltbaren Kupplungseinheit.
- Fig. 4c: stellt eine Detailansicht aus Fig. 4a dar.
- Fig. 5: zeigt in einer Detailansicht eine weitere mögliche Ausführungsform der erfindungsgemässen Vorrichtung zur Winkeleinstellung.

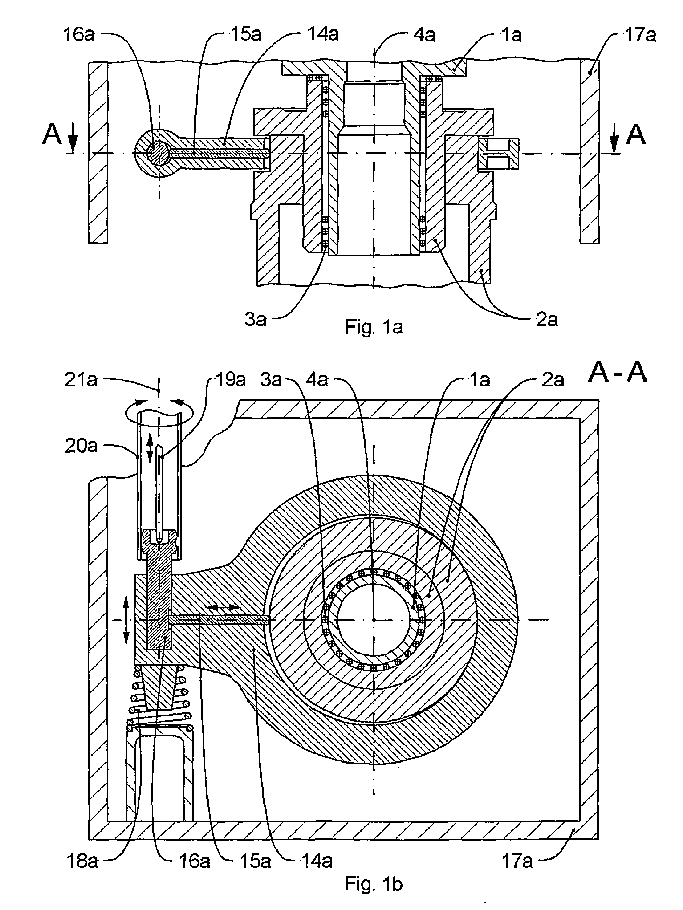

Fig. 1a und 1b zeigen zwei unterschiedliche Querschnitte einer Ausführungsform einer ersten aus dem Stand der Technik bekannten Vorrichtung zur Winkeleinstellung, wobei der Verlauf des Querschnitts der Fig. 1b durch die Schnittlinie A-A in Fig. 1a gekennzeichnet ist. Die in einem geodätischen Messinstrument, insbesondere einem Theodoliten, Tachymeter oder einer Totalstation zum Einsatz kommende Vorrichtung besitzt eine nur teilweise dargestellte Zieleinheit 1a in Form einer Alhidade mit einem Gehäuse 17a und eine zweiteilig dargestellte Bezugsbasis 2a, die ein nicht dargestelltes Theodolitenunterteil ausweist. Ein Lager 3a, das als ein Wälzlager ausgebildet ist, jedoch auch als ein Gleitlager ausgebildet sein kann, ermöglicht ein Verdrehen der Zieleinheit 1a gegenüber der Bezugsbasis 2a um eine Achse 4a, die die Stehachse bildet. Um die Bezugsbasis 2a ist ein Klemmring 14a mit einem Klemmbolzen 15a angeordnet. Durch Verdrehen einer Exzenterwelle 16a um eine Einstellachse 21a über eine kardanartige Schnellverstell-Hohlwelle 20a, die mit einem nicht dargestellten Klemmhebel am Gehäuse 17a der Alhidade des Messinstruments verbunden ist, wird der Klemmbolzen 15a entlang einer die Achse 4a schneidenden Achse verstellt, wodurch sich die Reibung zwischen der Bezugsbasis 2a und dem Klemmring 14a, abhängig vom Verdrehwinkel der Exzenterwelle 16a und der Schnellverstell-Hohlwelle 20a, verändert. Somit wirkt der Klemmring 14a als ein über die Schnellverstell-Hohlwelle 20a betätigbares Kupplungselement, über das ein Drehmomentfluss um die Achse 4a zwischen dem Klemmring 14a und der Bezugsbasis 2a reduzierbar oder unterbrechbar ist, wodurch der Verdrehwinkel der Zieleinheit 1a gegenüber der Bezugsbasis 2a um die Achse 4a über direktes leichtgängiges manuelles Verdrehen der Zieleinheit 1a schnellverstellt werden kann. Im geklemmten Zustand kann ein maximales Drehmoment von zirka 1050 Nmm übertragen werden, ohne dass es zu einem Schlupf zwischen dem Klemmring 14a und der Bezugsbasis 2a kommt, so dass ein unbeabsichtigtes Verstellen verhindert wird, wohingegen im ungeklemmten Zustand der Klemmring 14a im Wesentlichen frei gegenüber der Bezugseinheit um die Achse 4a verdreht werden kann. Insbesondere der Klemmring 14a und ein Teil der Bezugsbasis 2a bilden zusammen mit dem Klemmbolzen 15a, der Exzenterwelle 16a und der Schnellverstell-Hohlwelle 20a eine fremdschaltbare, mechanisch betätigbare, reibschlüssige Kupplungseinheit. Der Klemmring 14a ist über eine Schraubenfeder 18a und einen Feineinstelldorn 19a mit dem Gehäuse 17a verbunden. Durch Verstellen des Feineinstelldorns 19a entlang der Einstellachse 21a wird die Zieleinheit 1a gegenüber dem Klemmring 14a um die Achse 4a verdreht. Die Bewegung des Feineinstelldorns 19a entlang der Einstellachse 21a erfolgt präzise über einen nicht dargestellten, von einem Drehknopf am Gehäuse 17a der Alhidade des Messinstruments antreibbaren Gewindespindel-Feintrieb, der somit ein zu der Kupplungseinheit in Reihe geschaltetes Getriebe bildet, wobei die Kupplungseinheit und das Getriebe in einem möglichen Drehmomentfluss um die Achse 4a zwischen dem Gehäuse 17a und somit der Zieleinheit 1a und der Bezugsbasis 2a angeordnet sind. Die Schraubenfeder 18a drückt den Klemmring 14a über die Exzenterwelle 16a gegen den Feineinstelldorn 19a. Bedingt durch den begrenzten Einstellweg des Feineinstelldorns 19a und die geometrischen Gegebenheiten kann die präzise Winkeleinstellung der Zieleinheit 1a gegenüber der Bezugsbasis 2a um die Achse 4a nur innerhalb gewisser Grenzen erfolgen. Selbst im geklemmten Zustand ist es möglich, die Zieleinheit 1a gegenüber der Bezugsbasis 2a unter Gegenwirken der Kraft der Schraubenfeder 18a geringfügig zu verdrehen, wobei sich die ursprüngliche Winkeleinstellung wieder einstellt, sobald keine ausreichende Kraft gegen die Schraubenfeder 18a mehr wirkt.

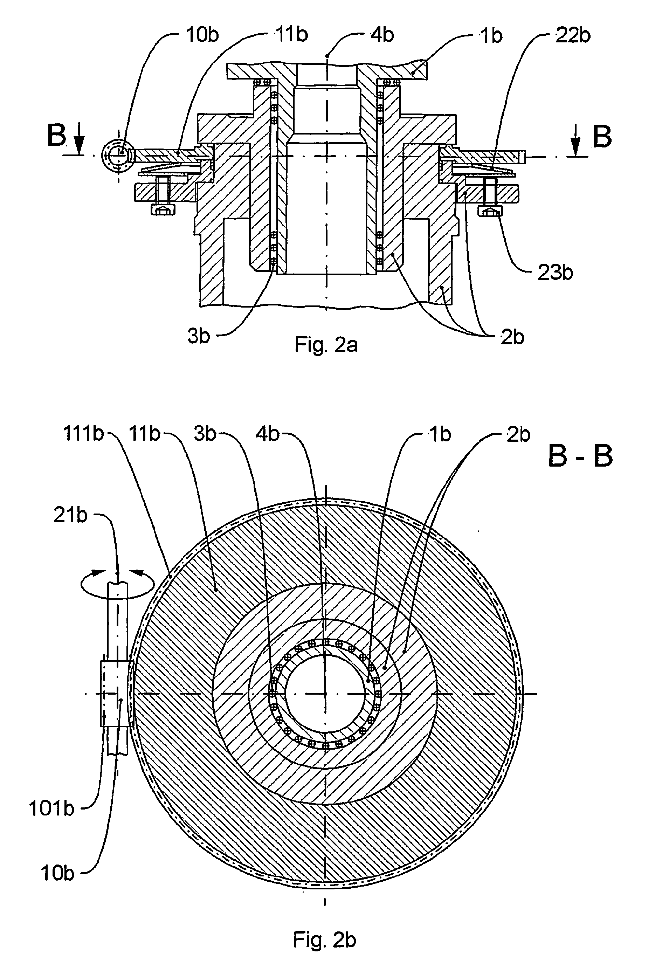

In Fig. 2a und 2b ist in den beiden Querschnitten eine Ausführungsform einer zweiten aus dem Stand der Technik bekannten Vorrichtung zur Winkeleinstellung dargestellt. Eine Zieleinheit 1b in Form einer Alhidade beispielsweise eines Theodoliten ist über ein Lager 3b um die Achse 4b gegenüber einer, ein nicht dargestelltes Theodolitenunterteil aufweisenden Bezugsbasis 2b drehbar gelagert. Um die Achse 4b ist weiters ein Schneckenrad 11b angeordnet, das gegenüber der Bezugsbasis 2b verdrehbar ist. Über eine Rutschkupplungs-Feder 22b, die über Vorspannschrauben 23b zwischen der Bezugsbasis 2b und dem Schneckenrad 11b gespannt ist, wird mittels Reibung ein Drehmoment um die Achse 4b bis zu einer durch die Einstellung der Vorspannschrauben 23b bestimmten Grenze übertragen. Sobald das Grenzmoment durch Übergang von Haftreibung in Gleitreibung erreicht ist, kommt es zu einem Schlupf zwischen der Rutschkupplungsfeder 22b und dem Schneckenrad 11b oder der Bezugsbasis 2b, wodurch ein Verdrehen des Schneckenrades 11b gegenüber der Bezugsbasis 2b stattfindet. Die Verzahnung 111b des Schneckenrades 11b greift in die Verzahnung 101b einer Schnecke 10b ein. Die Schnecke 10b ist indirekt mit der Zieleinheit 1b verbunden und kann indirekt über einen nicht dargestellten Drehknopf am nicht dargestellten Gehäuse des Theodoliten um die Einstellachse 21b präzise verdreht werden. Somit bilden ein Teil der Bezugsbasis 2b, die Rutschkupplungsfeder 22b, die Vorspannschrauben 23b und ein Teil des Schneckenrads 11b eine drehmomentgeschaltete, reibschlüssige Kupplungseinheit, die in Reihe zu einem Getriebe geschaltet ist, das insbesondere durch das Schneckenrad 11b und die Schnecke 10b gebildet wird, wobei das Schneckenrad 11b sowohl ein Element der Kupplungseinheit, als auch ein Bestandteil des Getriebes ist. Die Rutschkupplung mit der Rutschkupplungsfeder 22b und den Vorspannschrauben 23b ermöglicht ein direktes manuelles Schnellverstellen des Verdrehwinkels der Zieleinheit 1b gegenüber der Bezugsbasis 2b um die Achse 4b durch Überwinden eines Grenzmoments, das beispielsweise etwa 520 Nmm beträgt, wohingegen über das Getriebe mit dem Schneckenrad 11b und der Schnecke 10b eine unendliche Feineinstellung der Verdrehwinkels durchgeführt werden kann. Das Grenzmoment der Rutschkupplung kann durch Verstellen der Vorspannschrauben 23b, die auf der Bezugsbasis 2b angeordnet sind, verstellt werden. Das Grenzmoment wird so gewählt, dass einerseits ein versehentliches Verstellen, beispielsweise durch Betätigung von Bedienelementen an der Zieleinheit 1b, vermieden wird, andererseits die Zieleinheit 1b direkt ohne einen allzu grossen Kraftaufwand verstellt werden kann. Eine Anpassung des Grenzdrehmoments kann jedoch nicht vom Benutzer durchgeführt werden. Eine leichtgängige Schnellverstellung und eine sichere Fixierung des eingestellten Winkels sind daher nicht möglich.

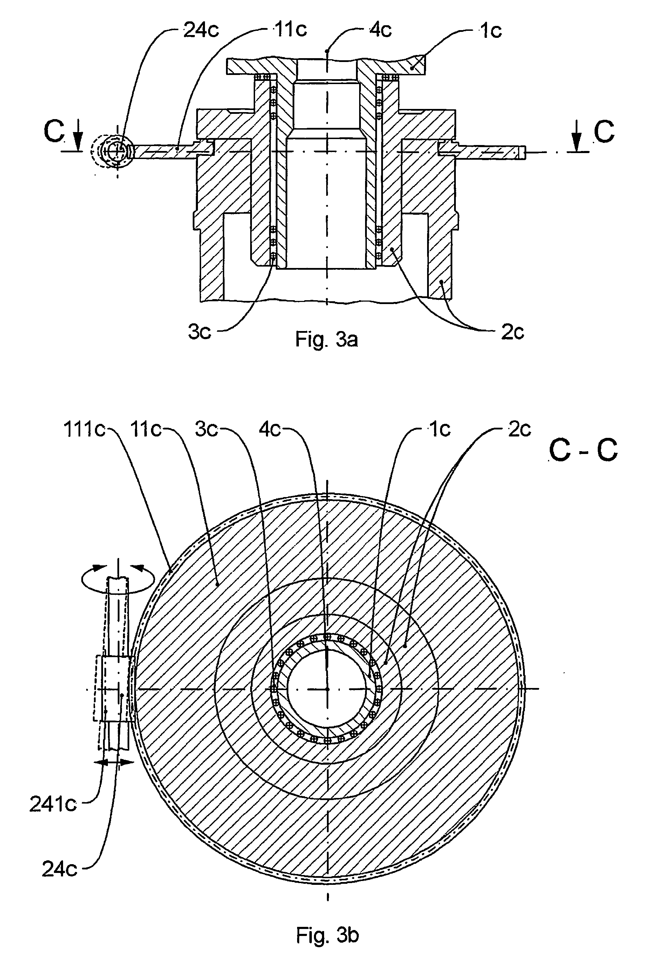

Fig. 3a und 3b stellen in den beiden Querschnitten eine Ausführungsform einer dritten aus dem Stand der Technik bekannten Vorrichtung zur Winkeleinstellung in einem geodätischen Messinstrument, insbesondere einem Theodoliten, Tachymeter oder einer Totalstation, dar. Wie die Ausführungsform von Fig. 2a und 2b weist die Vorrichtung ein Schneckenrad 11c, das um die Achse 4c angeordnet ist, auf. Jedoch ist hier das Schneckenrad 11c fest mit der Bezugsbasis 2c verbunden. Die Verzahnung 111c des Schneckenrades 11c greift in die Verzahnung 241c einer Schnecke 24c ein. Durch präzises Verdrehen der indirekt mit dem nicht dargestellten Gehäuse des Messinstruments und somit mit der Zieleinheit 1c verbundenen Schnecke 24c kann der Verdrehwinkel der im Lager 3c gelagerten Zieleinheit 1c gegenüber der Bezugsbasis 2c um die Achse 4c präzise verstellt werden. Die Schnecke 24c ist als eine schwenkbare Schnecke ausgebildet, die aus dem Eingriffsbereich der Schneckenrad-Verzahnung 111c ausgeschwenkt werden kann. Sobald die Schwenk-Schnecken-Verzahnung 241c und die Schneckenrad-Verzahnung 111c nicht mehr im Eingriff stehen, kann der Verdrehwinkel der Zieleinheit 1c gegenüber der Bezugsbasis 2c um die Achse 4c über direktes leichtgängiges manuelles Verdrehen der Zieleinheit 1c schnellverstellt werden. Es ist offensichtlich, dass das Eingreifen der Verzahnungen problematisch ist. Insbesondere durch Ratschen können die Zahnflanken der Schwenk-Schnecken-Verzahnung 241c und der Schneckenrad-Verzahnung 111c beschädigt werden.

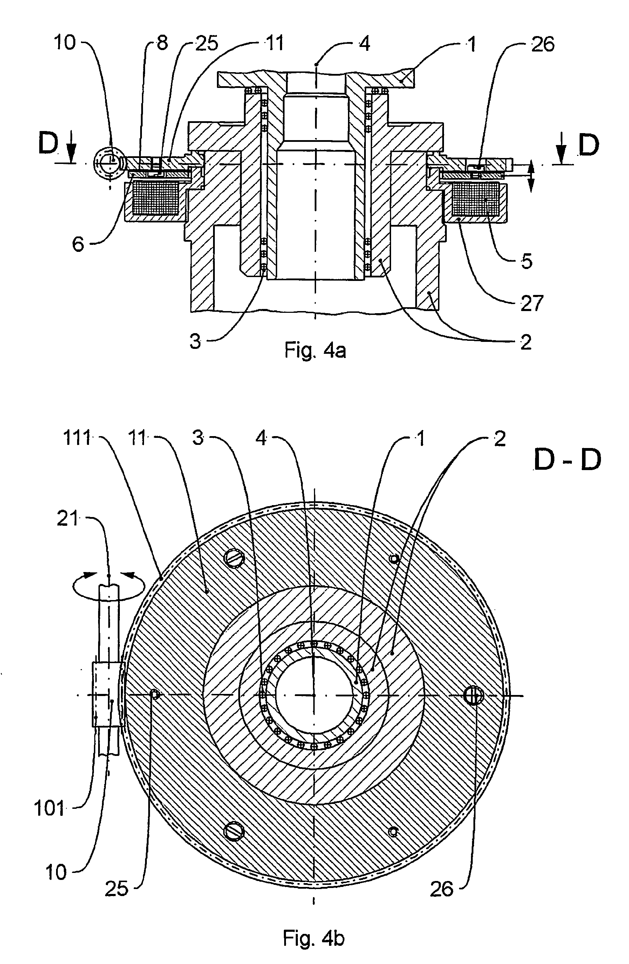

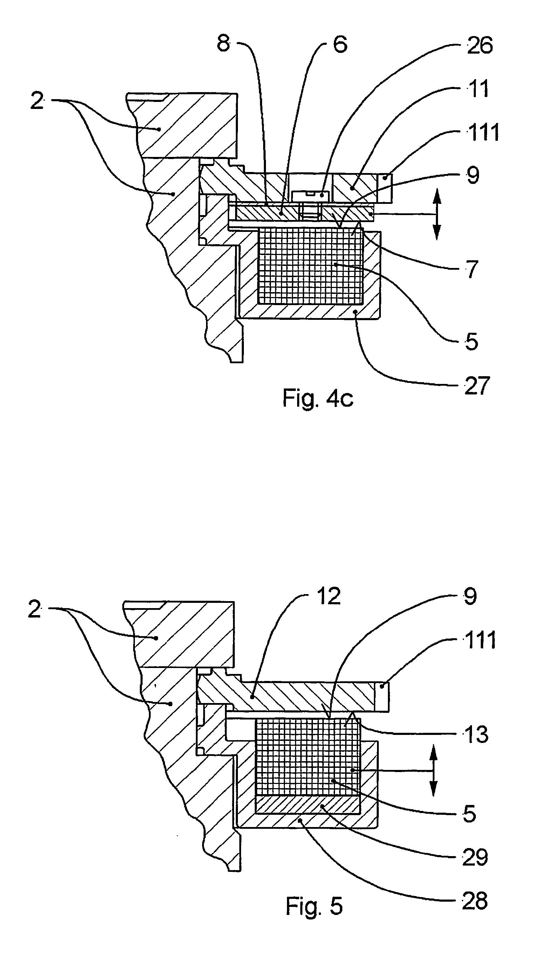

Fig. 4a und 4b zeigen eine mögliche Ausführungsform einer erfindungsgemässen Vorrichtung zur Winkeleinstellung. Fig. 4c stellt ein Detail von Fig. 4a vergrössert dar. Eine Zieleinheit 1 ist über ein Lager 3, das als spielfreies Wälzlager ausbildet ist, jedoch auch als ein Gleitlager ausgebildet sein kann, um eine Achse 4 gegenüber einer Bezugsbasis 2, die zweiteilig dargestellt ist, verdrehbar gelagert. An der Bezugsbasis 2 ist ein Magnetträger 27, der beispielsweise aus einer Aluminiumlegierung besteht, mit einem Elektromagneten 5, der die Achse 4 umgibt, fest angeordnet. Ein Schneckenrad 11, das gegenüber der Bezugsbasis 2 verdrehbar ist, umgibt oberhalb des Elektromagneten 5 ebenfalls die Achse 4 und die Bezugsbasis 2. Drei auf einem Kreis um die Achse 4 im Abstand von je 120° befindliche Schrauben 25, im Folgenden als Schneckenrad-Schrauben 25 bezeichnet, verbinden ein Federelement 8, das als eine dünne ebene Scheibe aus Federstahl oder als eine Federmembran ausgebildet ist, mit dem Schneckenrad 11. Über drei weitere Schrauben 26, die im Folgenden als Bremsscheiben-Schrauben 26 bezeichnet werden, die ebenfalls auf dem Kreis im Abstand von je 120° angeordnet sind, jedoch gegenüber den Schneckenrad-Schrauben 25 um 60° auf dem Kreis versetzt sind, ist das Federelement 8 mit einer ebenen ferromagnetischen Bremsscheibe 6 verbunden. Die Bremsscheibe 6 besteht beispielsweise aus 9 SMnPB 30. Durch die spezielle Anordnung von Schneckenrad 11, Federelement 8, Bremsscheibe 6, Schneckenrad-Schrauben 25 und Bremsscheiben-Schrauben 26 ist die Bremsscheibe 6 gegenüber dem Schneckenrad 11 entlang der Achse 4 zurückfedernd beweglich. Im Normalzustand liegen Schneckenrad 11, Federelement 8 und Bremsscheibe 6 direkt aufeinander. Sobald eine durch ein Magnetfeld des Elektromagneten 5 hervorgerufene Kraft auf die Bremsscheibe 6 entlang der Achse 4 in Richtung des Elektromagneten 5 wirkt, wird das im Ausgangszustand ebene Federelement 8 elastisch verformt und nimmt aufgrund der Anordnung der Schrauben (25, 26) eine Wellenform entlang des Kreises an. Unter Gegenwirken dieser Federkraft wird somit die Bremsscheibe 6 in Richtung des Elektromagneten 5 bewegt, bis, bei ausreichender magnetischer Kraft, die Elektromagneten-Oberfläche 9 und die Bremsscheiben-Oberfläche 7, die beide einander gegenüberliegen, gleichmässig in Kontakt geraten und somit als Reibflächen entlang des gesamten Umfangs wirken. Da der Elektromagnet 5 über den Magnetträger 27 mit der Bezugsbasis 2 verbunden ist, kann somit durch Wirken eines Magnetfeldes, das in einem Verhältnis zu einer am Elektromagneten 5 angelegten Spannung steht, ein Drehmoment zwischen dem Schneckenrad 11 und der Bezugsbasis 2 übertragen werden. Wirkt keine magnetische Kraft mehr auf die Bremsscheibe 5, nimmt das Federelement 8 wieder einen ebenen Zustand an, wodurch sich die Bremsscheibe 5 in die Ausgangsposition zurück bewegt und kein Kontakt mehr zwischen der Bremsscheiben-Oberfläche 7 und der Elektromagneten-Oberfläche 9 besteht. Somit bilden insbesondere der Elektromagnet 5 mit seiner Elektromagneten-Oberfläche 9 und die Bremsscheibe 6 mit ihrer Bremsscheiben-Oberfläche 7 zusammen mit dem Federelement 8, den Schrauben 25, 26 und einem Teil des Schneckenrads 11 eine elektrisch fremdschaltbare Kupplungseinheit, mit der abhängig von einer Spannung ein Drehmomentfluss im Wesentlichen unterbrochen oder ein maximal übertragbares Drehmoment variiert werden kann. Das Schneckenrad weist eine Schneckenrad-Verzahnung 111 auf, die in die Schnecken-Verzahnung 101 einer Schnecke 10 eingreift. Die Schnecke 10 ist drehbar um eine Einstellachse 21 gelagert und steht indirekt in Verbindung mit der Zieleinheit 1. Somit kann, sofern der Drehmomentfluss durch die Kupplungseinheit nicht unterbrochen wird, durch Drehen der Schnecke 10 um die Einstellachse 21 ein Verdrehwinkel zwischen der Zieleinheit 1 und der Bezugsbasis 2 um die Achse 4 präziser eingestellt werden, während bei unterbrochenem Drehmomentfluss eine direkte manuelle Schnellverstellung des Verdrehwinkels durch direktes Verdrehen der Zieleinheit 1 möglich ist. Das Schneckenrad 11 mit seiner Schneckenrad-Verzahnung 111 bildet zusammen mit der Schnecke 10 und ihrer Schnecken-Verzahnung 101 ein Getriebe, das in Reihe zu der Kupplungseinheit geschaltet ist, wobei das Getriebe und die Kupplungseinheit in einem möglichen Drehmomentfluss um die Achse 4 zwischen der Zieleinheit 1 und der Bezugsbasis 2 angeordnet sind. Selbstverständlich kann der Schnecke 10 ein weiteres Getriebe zum Antrieb vorgeschaltet sein. Das Schneckenrad 11 stellt einerseits ein Element der Kupplungseinheit, andererseits eine Bauteil des Getriebes dar. Die dargestellte Ausführungsform kann sowohl durch einen Elektromagneten, bei dem bei angelegter Spannung ein Magnetfeld auf die Bremsscheibe 6 wirkt, oder durch einen Permanent-Elektromagneten, dessen Magnetfeld einerseits im spannungslosen Zustand mittels eines Permanentmagneten auf die Bremsscheibe 6 wirkt und andererseits bei Anlegen einer Spannung an mindestens eine Erregerwicklung im Bereich der Bremsscheibe 6 reduziert wird, realisiert werden. In einer alternativen Ausführensform wird auf die Schneckenrad-Schrauben 25 und die Bremsscheiben-Schrauben 26 verzichtet. Anstatt dessen findet die Fixierung über Punktschweissungen oder Punktklebungen statt.

Eine weitere Ausführungsform der erfindungsgemässen Vorrichtung zur Winkeleinstellung, eine Variante der in Fig. 4a, 4b und 4c gezeigten Ausführungsform, ist in einer Detailansicht in Fig. 5 dargestellt. Hier wird in der Kupplungseinheit anstelle einer beweglichen Bremsscheibe 6 mit einem Federelement 8 ein entlang der Achse 4 beweglicher Elektromagnet 5 eingesetzt, der in einem Magnetträger 28 über ein Magnetträger-Federelement 29 gelagert ist. Das Magnetfeld des Elektromagneten 5 wirkt direkt auf ein ferromagnetisches Schneckenrad 12, wodurch sich unter Gegenwirken des Magnetträger-Federelements 29 der Elektromagnet 5 in Richtung des ferromagnetischen Schneckenrades 12 bewegt, bis, bei ausreichender magnetischer Kraft, die Elektromagneten-Oberfläche 9 und die Scheckenrad-Oberfläche 13, die beide einander gegenüberliegen, gleichmässig in Kontakt geraten und somit als Reibflächen wirken. Es ist ebenfalls möglich, das Magnetträger-Federelement 29 wegzulassen und den geführten Elektromagneten im Magnetträger 28 in Richtung der Achse 4 beweglich zu lagern, wodurch die Schwerkraft den Elektromagneten 5 bei nicht wirkendem Magnetfeld in die Ausgangsposition zurück bringt. Der restliche Aufbau der in Fig. 5 gezeigten Variante und die Funktionsweise entspricht der Ausführungsform von Fig. 4a, 4b und 4c.

## Patentansprüche

1. Vorrichtung zur Winkeleinstellung einer Zieleinheit (1) auf ein Ziel, insbesondere für ein geodätisches Messinstrument, mit
- einer Bezugsbasis (2),
- mindestens einem Lager (3) zur drehbaren Lagerung der Zieleinheit (1) gegenüber der Bezugsbasis (2) um eine Achse (4),
- einem Getriebe zur Einstellung eines Drehwinkels zwischen der Zieleinheit (1) und der Bezugsbasis (2) um die Achse (4) und
- einer Kupplungseinheit, über die ein Drehmomentfluss um die Achse (4) begrenzbar oder unterbrechbar ist,
wobei
- das Getriebe und die Kupplungseinheit in Reihe in dem Drehmomentfluss zwischen der Zieleinheit (1) und der Bezugsbasis (2) geschaltet sind und
- der Drehmomentfluss um die Achse (4) zwischen der Zieleinheit (1) und der Bezugsbasis (2) direkt oder indirekt im Wesentlichen über das Getriebe und die Kupplungseinheit erfolgt, sofern der Drehmomentfluss nicht durch die Kupplungseinheit unterbrochen wird,
**dadurch gekennzeichnet, dass**
- die Kupplungseinheit mindestens einen Elektromagneten (5) zur Erzeugung eines Magnetfeldes aufweist und
- der Drehmomentfluss um die Achse (4) durch Wirken oder nicht Wirken des Magnetfeldes begrenzbar oder unterbrechbar ist.

2. Vorrichtung nach Anspruch 1, **dadurch gekennzeichnet, dass** der Elektromagnet (5) als ein Permanent-Elektromagnet mit mindestens einem Permanentmagneten und mindestens einer Erregerwicklung ausgebildet ist, welche Erregerwicklung bei angelegter Spannung ein Permanentmagnetfeld des Permanentmagneten wenigstens in Teilbereichen reduziert oder neutralisiert.

3. Vorrichtung nach Anspruch 1 oder 2, **dadurch gekennzeichnet, dass** der Elektromagnet (5) im Wesentlichen ringförmig ausgebildet und um die Achse (4) angeordnet ist.

4. Vorrichtung nach Anspruch 1 oder 2, **dadurch gekennzeichnet, dass** der Elektromagnet (5) als mindestens zwei Einzelelektromagnete ausgebildet ist, die im Wesentlichen auf einem Kreis, dessen Mittelpunkt auf der Achse (4) liegt und dessen Kreisfläche von der Achse (4) lotrecht durchstossen wird, angeordnet sind.

5. Vorrichtung nach einem der Ansprüche 1 bis 4, **dadurch gekennzeichnet, dass** die Kupplungseinheit mindestens zwei - insbesondere scheibenförmige und um die Achse (4) angeordnete - Reibflächen bildende Teile zur, durch Aufeinanderpressen hervorrufbaren, reibschlüssigen Übertragung eines Drehmoments aufweist.

6. Vorrichtung nach Anspruch 5, **dadurch gekennzeichnet, dass** die Kupplungseinheit
- eine ferromagnetische Bremsscheibe (6), die die Achse (4) umgibt und auf die das Magnetfeld wirken kann, mit einer Bremsscheiben-Oberfläche (7), und
- ein - insbesondere scheibenförmiges, ebenes - Federelement (8), das einerseits mit dem Getriebe, andererseits mit der Bremsscheibe (6) in Verbindung steht,
aufweist, und die Reibflächen bildenden Teile zumindest als
- die ferromagnetische Bremsscheibe (6) mit der Bremsscheiben-Oberfläche (7) und als
- der Elektromagnet (5) mit einer Elektromagneten-Oberfläche (9)
ausgebildet sind, wobei die Bremsscheibe (6) - insbesondere durch Wirken des Magnetfeldes - unter Gegenwirkung einer Federkraft des Federelements (8), in Richtung des Elektromagneten (5) bis zu dem Aneinanderpressen der Bremsscheiben-Oberfläche (7) an die Elektromagneten-Oberfläche (9) beweglich ist.

7. Vorrichtung nach Anspruch 6, **dadurch gekennzeichnet, dass**
- das Getriebe eine Schnecke (10) und ein Schneckenrad (11), dessen Mittelpunkt auf der Achse (4) liegt, aufweist, und
- die Bremsscheibe (6) der Kupplungseinheit über das Federelement (8) der Kupplungseinheit mit dem Schneckenrad (11) des Getriebes direkt verbunden ist.

8. Vorrichtung nach Anspruch 5, **dadurch gekennzeichnet, dass** eines der Reibflächen bildenden Teile der Kupplungseinheit und ein Zahnradteil des Getriebes als ein gemeinsames Teil ausgebildet sind.

9. Vorrichtung nach Anspruch 8, **dadurch gekennzeichnet, dass**
- das Getriebe eine Schnecke (10) und ein ferromagnetisches Schneckenrad (12), dessen Mittelpunkt auf der Achse (4) liegt und auf das das Magnetfeld wirken kann, mit einer Schneckenrad-Oberfläche (13) aufweist,
- das gemeinsame Teil der Kupplungseinheit und des Getriebes durch das ferromagnetische Schneckenrad (12) gebildet wird, und
- die Reibflächen bildenden Teile zumindest als
• das ferromagnetische Schneckenrad (12) mit der Schneckenrad-Oberfläche (13) und als
• der Elektromagnet (5) mit einer Elektromagneten-Oberfläche (9)
ausgebildet sind,
wobei der Elektromagnet (5) - insbesondere durch Wirken des Magnetfeldes und insbesondere unter Gegenwirken einer durch ein Federelement (2) hervorgerufenen Federkraft - in Richtung des ferromagnetischen Schneckenrades (12) bis zu dem Aneinanderpressen der Elektromagneten-Oberfläche (9) mit der Schneckenrad-Oberfläche (13) beweglich ist.

10. Vorrichtung nach einem der Ansprüche 1 bis 9, **dadurch gekennzeichnet, dass** das Getriebe zur Einstellung des Drehwinkels einen unbegrenzten Einstellbereich aufweist.

## Claims

1. Device for adjusting the angle of a sighting unit (1) to a target, in particular for a geodetic measuring instrument, comprising
- a reference base (2),
- at least one bearing (3) for supporting the sighting unit (1) in a fashion rotatable about an axis (4), relative to the reference base (2),
- a gear for adjusting an angle of rotation between the sighting unit (1) and the reference base (2) about the axis (4), and
- a clutch unit via which a torque flux about the axis (4) can be limited or can be interrupted,
- the gear and the clutch unit being connected in series in the torque flux between the sighting unit (1) and the reference base (2), and
- the torque flux about the axis (4) between the sighting unit (1) and the reference base (2) being effected directly or indirectly substantially via the gear and the clutch unit unless the torque flux is interrupted by the clutch unit,
**characterized in that**
- the clutch unit has at least one electromagnet (5) for generating a magnetic field, and
- the torque flux about the axis (4) can be limited or interrupted by the action or inaction of the magnetic field.

2. Device according to Claim 1, **characterized in that** the electromagnet (5) is designed as a permanent electromagnet comprising at least one permanent magnet and at least one excitation winding, which excitation winding reduces or neutralizes a permanent magnetic field of the permanent magnet at least in subregions when a voltage is applied.

3. Device according to Claim 1 or 2, **characterized in that** the electromagnet (5) is of substantially annular design and arranged around the axis (4).

4. Device according to Claim 1 or 2, **characterized in that** the electromagnet (5) is designed as at least two individual electromagnets substantially on a circle whose centre lies on the axis (4) and through the circular area of which the axis (4) passes perpendicularly.

5. Device according to one of Claims 1 to 4, **characterized in that** the clutch unit has at least two parts forming friction surfaces - in particular disc-shaped parts arranged around the axis (4) - for torque transmission by friction which can be caused by pressing against one another.

6. Device according to Claim 5, **characterized in that** the clutch unit
- has a ferromagnetic brake disc (6) which surrounds the axis (4) and on which the magnetic field can act, and with a brake disc surface (7) and
- a spring element (8) - particularly a disc-shaped, flat one - which is connected on the one hand to the gear, and on the other hand to the brake disc (6), and the parts forming friction surfaces are at least designed as
- the ferromagnetic brake disc (6) with the brake disc surface (7), and as
- the electromagnet (5) with an electromagnet surface (9),
it being possible for the brake disc (6) to be moved in the direction of the electromagnet (5) until the brake disc surface (7) presses against the electromagnet surface (9) - particularly by the action of the magnetic field - by counteracting a spring force of the spring element (8).

7. Device according to Claim 6, **characterized in that**
- the gear has a worm (10) and a worm wheel (11) whose centre lies on the axis (4), and
- the brake disc (6) of the clutch unit is directly connected to the worm wheel (11) of the gear via the spring element (8) of the clutch unit.

8. Device according to Claim 5, **characterized in that** one of the parts of the clutch unit which form the friction surfaces and a toothed wheel part of the gear are designed as a common part.

9. Device according to Claim 8, **characterized in that**
- the gear has a worm (10) and a ferromagnetic worm wheel (12) whose centre lies on the axis (4) and on which the magnetic field can act, with a worm wheel surface (13),
- the common part of the clutch unit and of the gear is formed by the ferromagnetic worm wheel (12), and
- the parts forming the friction surfaces are designed at least as
• the ferromagnetic worm wheel (12) with the worm wheel surface (13), and as
• the electromagnet (5) with an electromagnet surface (9),
it being possible for the electromagnet (5) to be moved in the direction of the ferromagnetic worm wheel (12) until the electromagnet surface (9) presses against the worm wheel surface (13) - in particular by the action of the magnetic field and, in particular, by counteracting a spring force caused by a spring element (2).

10. Device according to one of Claims 1 to 9, **characterized in that** the gear for adjusting the angle of rotation has an unlimited adjustment range.

## Revendications

1. Dispositif pour ajuster un angle d'une unité de visée (1) sur une cible, en particulier pour un instrument de mesure géodésique, comprenant :
- une base de référence (2),
- au moins un palier (3), pour le montage en palier, avec possibilité de rotation, de l'unité de visée (1) par rapport à la base de référence (2) autour d'un axe (4),
- une transmission pour le réglage d'un angle de rotation entre l'unité de visée (1) et la base de référence (2) autour de l'axe (2), et
- une unité de couplage, par l'intermédiaire de laquelle un flux de couple de rotation autour de l'axe (4) est susceptible d'être limité ou susceptible d'être interrompu,
où
- la transmission et l'unité de couplage sont branchées en série dans le flux de couple de rotation se faisant entre l'unité de visée (1) et la base de référence (2), et
- le flux de couple de rotation autour de l'axe (4), entre l'unité de visée (1) et la base de référence (2), s'effectuant directement ou indirectement essentiellement par la transmission et l'unité de couplage, dans la mesure où le flux de couple de rotation n'est pas interrompu par l'unité de couplage,
**caractérisé en ce que**
- l'unité de couplage présente au moins un électroaimant (5) pour générer un champ magnétique, et
- le flux de couple de rotation autour de l'axe (4) est susceptible d'être limité ou susceptible d'être interrompu par action ou non action du champ magnétique.

2. Dispositif selon la revendication 1, **caractérisé en ce que** l'électroaimant (5) est réalisé sous forme d'un électroaimant permanent avec au moins un aimant permanent et au moins un enroulement excitateur, ledit enroulement excitateur réduisant ou neutralisant, au moins dans des zones partielles, un champ magnétique permanent de l'aimant permanent, lorsqu'une tension est appliquée.

3. Dispositif selon la revendication 1 ou 2, **caractérisé en ce que** l'électroaimant (5) est sensiblement en forme d'anneau et est disposé autour de l'axe (4).

4. Dispositif selon la revendication 1 ou 2, **caractérisé en ce que** l'électroaimant (5) est réalisé sous forme d'au moins deux électroaimants individuels, disposés sensiblement sur un cercle, dont le centre est situé sur l'axe (4) et dont la surface de cercle est traversée verticalement par l'axe (4).

5. Dispositif selon l'une des revendications 1 à 4, **caractérisé en ce que** l'unité de couplage présente au moins deux parties formant des faces de friction - en particulier en forme de disque et disposées autour de l'axe (4) - pour la transmission, par une liaison par friction, susceptible d'être provoquée par pressage l'une sur l'autre, d'un couple de rotation.

6. Dispositif selon la revendication 5, **caractérisé en ce que** l'unité de couplage présente
- un disque de frein (6) ferromagnétique, entourant l'axe (4) et sur lequel le champ magnétique peut agir, avec une surface de disque de frein (7), et
- un élément élastique (8) - plan, en particulier en forme de disque -, relié d'une part à la transmission, d'autre part au disque de frein (6),
et les parties formant les faces de friction étant réalisées au moins sous forme de
- disque de frein (6) ferromagnétique avec la surface de disque de frein (7), et sous forme d'
- électroaimant (5) avec une surface d'électroaimant (9),
le disque de frein (6) étant déplaçable - en particulier par action du champ magnétique - sous l'effet adverse d'une force élastique venant de l'élément élastique (8), en direction de l'électroaimant (5), jusqu'à pressage, l'une sur l'autre, de la surface de disque de frein (7) sur la surface d'électroaimant (9).

7. Dispositif selon la revendication 6, **caractérisé en ce que**
- la transmission présente une vis (10) et une roue à vis (11), dont le centre est situé sur l'axe (4), et
- le disque de frein (6) de l'unité de couplage est directement relié à la roue à vis (11) de la transmission, par l'intermédiaire de l'élément élastique (8) de l'unité de couplage.

8. Dispositif selon la revendication 5, **caractérisé en ce que** l'une des parties, formant les faces de friction, de l'unité de couplage et une partie de roue dentée de la transmission sont réalisées sous forme de partie commune.

9. Dispositif selon la revendication 8, **caractérisé en ce que**
- la transmission présente une vis (10) et une roue à vis (12) ferromagnétique, dont le centre est situé sur l'axe (4) et sur laquelle le champ magnétique peut agir, avec une surface de roue à vis (13),
- la partie commune de l'unité de couplage et de la transmission est formée par la roue à vis (12) ferromagnétique, et
- les parties, formant les faces de friction, sont réalisées au moins sous forme de
• une roue à vis (12) ferromagnétique avec la surface de roue à vis (13), et sous forme de
• l'électroaimant (5) avec une surface d'électroaimant (9),
l'électroaimant (5) étant déplaçable - en particulier par action du champ magnétique et, en particulier, sous l'effet adverse d'une force élastique provoquée par un élément élastique (2) - en direction de la roue à vis (12) ferromagnétique, jusqu'à pressage, l'une sur l'autre, de la surface d'électroaimant (9) avec la surface de roue à vis (13).

10. Dispositif selon l'une des revendications 1 à 9, **caractérisé en ce que** la transmission de réglage de l'angle de rotation présente une plage de réglage illimitée.
